# EUROPÄISCHE PATENTSCHRIFT

(11) **EP 1 368 215 B1**
(45) Veröffentlichungstag und Bekanntmachung des Hinweises auf die Patenterteilung: **21.06.2006**
(21) Anmeldenummer: 01989380.9
(22) Anmeldetag: 06.12.2001
(51) Int. Cl.: B60S 1/34

(54) **WISCHARM**
WIPER ARM
BRAS DE MONTURE D'ESSUIE-GLACE

(30) Priorität: 10.02.2001 DE 10106235
(43) Veröffentlichungstag der Anmeldung: 10.12.2003
(73) Patentinhaber: ROBERT BOSCH GMBH, 70442 Stuttgart (DE)
(72) Erfinder: WEILER, Michael, 76131 Karlsruhe (DE)
(86) Internationale Anmeldenummer: PCT/DE2001/004608
(87) Internationale Veröffentlichungsnummer: WO 2002/064406

(56) Entgegenhaltungen:
- EP-A- 1 033 295
- WO-A-99/38736
- DE-A- 19 833 488
- PATENT ABSTRACTS OF JAPAN vol. 2000, no. 05, 14. September 2000 (2000-09-14) & JP 2000 062575 A (ASMO CO LTD;HONDA MOTOR CO LTD), 29. Februar 2000 (2000-02-29)

## Beschreibung

### Stand der Technik

Die Erfindung geht von einem Wischarm nach dem Oberbegriff des Anspruchs 1 aus.

Bekannte Scheibenwischer besitzen einen Wischarm, der aus einem Befestigungsteil und einem daran angelenkten Gelenkteil mit einer Wischstange besteht. An diese ist ein Wischblatt angelenkt, das aus einem Tragbügelsystem mit einem übergeordneten Mittelbügel und gelenkig verbundenen, untergeordneten Zwischenbügeln sowie Krallenbügeln und aus einer Wischleiste aufgebaut ist.

Das Gelenkteil weist an seinem zum Befestigungsteil weisenden Ende eine Federkammer für eine Zugfeder auf. Die Federkammer ist zur Fahrzeugscheibe hin offen und hat zur Wischstange hin eine schlitzförmige Erweiterung mit einem ersten Befestigungspunkt, an dem ein Haltebügel der Zugfeder eingehängt ist. Am anderen Ende der Zugfeder ist ein C-förmiger Bügel vorgesehen, der an einer Einhängevorrichtung des Befestigungsteils eingehängt ist, die als zweiter Befestigungspunkt dient. Ferner stützt sich das Gelenkteil über eine Nabe an einer bolzenförmigen Gelenkachse ab, die in einem ersten, dem Gelenkteil zugewandten Bereich des Befestigungsteils angeordnet ist. Das so gebildete Gelenk, auch Abklappgelenk genannt, und die Einhängevorrichtung der Zugfeder sind so zueinander angeordnet, dass die Zugfeder das Gelenkteil und die Wischstange mit dem Wischblatt in Richtung einer Fahrzeugscheibe zieht.

Zum Reinigen oder zur Montage des Wischblatts wird das Gelenkteil des Scheibenwischers von der Fahrzeugscheibe abgeklappt. Dazu wird das Gelenkteil um die Gelenkachse des Abklappgelenks geschwenkt, wobei die Zugfeder eine Stellung einnimmt, in der sie das Gelenkteil gegen einen Anschlag zieht, der sich am Befestigungsteil abstützt und die Schwenkbewegung begrenzt.

Ein zweiter Bereich des Befestigungsteils sitzt auf dem freien Ende einer Antriebswelle, die in einem Wischerlager gelagert ist und über eine Kurbel und ein Gestänge von einem Wischermotor angetrieben wird. Dieser wird von einer Platine gehalten, die an einer Fahrzeugkarosserie befestigt ist und die Wischerlager enthält. Häufig dienen die Wischerlager selbst als Befestigungsstellen, indem sie durch Öffnungen der Fahrzeugkarosserie ragen und unter Zwischenlage schwingungsdämpfender, gummielastischer Elemente mit der Fahrzeugkarosserie verschraubt sind.

Das aus der Fahrzeugkarosserie vorstehende Ende der Antriebswelle stellt bei Unfällen mit Fußgängern eine erhebliche Gefahrenquelle für Verletzungen dar. Entwürfe für Crash-Vorschriften der europäischen Kommission (EC III/5021/96 EN) definieren in Bezug auf Unfälle mit Fußgängern maximale Beschleunigungswerte, so genannte Kopfverletzungskriterien, im Bereich der Fahrzeughaube an der Wischeranlage. Diese Kriterien sind mit den üblichen Wischeranlagen nicht zu erreichen, selbst wenn die Fahrzeughaube die Antriebswelle überdeckt, da auch in diesem Fall nicht sichergestellt ist, dass der Abstand zwischen der Fahrzeughaube und der Antriebswelle, insbesondere bei geringen Haubenspalten, groß genug ist.

Eine mögliche Variante zur Abhilfe besteht darin, dass das Ende der Antriebswelle weiter in den Motorraum verlagert wird. Fahrzeughersteller fordern einen Mindestabstand von 65-85 mm zwischen der Fahrzeughaube und dem Antriebswellenende. Dadurch vergrößert sich auch dessen Abstand zum Gelenkteil, wodurch ein längeres Befestigungsteil benötigt wird. Außerdem ragt das Befestigungsteil mindestens beim Wischen immer noch in den Aufschlagbereich eines Fußgängers.

Aus der DE-A-199 03 140 (WO-A-99/38736) ist eine Wischeranlage mit einer verschiebbaren Antriebswelle bekannt. Nach dieser Schrift wird das herausragende Ende der Antriebswelle in die Fahrzeugkarosserie verschoben, wenn eine Axialkraft mit einer vorgegebenen Größe von außen auf das Wellenende wirkt. Dabei sind zur Dämpfung des Aufpralls zwischen einem nach innen wirkenden Anschlag der Antriebswelle und einem mit der Fahrzeugkarosserie fest verbundenen Teil oder zwischen einem solchen Teil und der Fahrzeugkarosserie Mittel vorgesehen, die sich unter Einwirkung einer kritischen Axialkraft in Achsrichtung plastisch und/oder elastisch verformen, so dass sich das Ende der Antriebswelle definiert in den Motorraum verschiebt. Solche Mittel können eine plastisch verformbare Blechhülse sein, die zweckmäßigerweise einen in Achsrichtung gewellten Bereich besitzt, oder dünnwandige, tellerförmige Elemente, die je nach Verschiebeweg zu mehreren wirkungsmäßig in Reihe angeordnet sein können. Diese Elemente können zur Antriebswelle oder zu anderen benachbarten Bauteilen ein so geringes Spiel aufweisen, dass sie sich bei ihrer Verformung an diese Bauteile anlegen und durch Reibung die Dämpfungswirkung verstärken. Schließlich können die Mittel so angeordnet sein, dass sie unter Einwirkung der kritischen Axialkraft gestaucht oder auseinander gezogen werden. Außerdem kann die Antriebswelle zum Lagergehäuse des Wischerlagers über Formschlusselemente mit einer Sollbruchstelle axial gesichert sein, die unter einer kritischen Axia1 kraft brechen oder in einen Freiraum umgebogen werden. Derartige Sollbruchstellen können durch Kerben, Bohrungen oder Scherstifte erzeugt werden. Abgesehen davon, dass einige Lösungen dieses Prinzips konstruktiv sehr aufwändig sind, ist es zudem nur wirkungsvoll, wenn der Aufschlag im Bereich des Antriebswellenendes erfolgt.

### Vorteile der Erfindung

Nach der Erfindung weist das Befestigungsteil eines Wischerantriebs eine Einrichtung auf, die ein definiertes Abknicken eines zum Gelenkteil weisenden ersten Bereichs des Befestigungsteils in Richtung auf eine Fahrzeugscheibe zulässt. Im Fall eines Aufschlags, beispielsweise durch den Kopf eines Fußgängers, gibt der Wischarm im Bereich des Befestigungsteils und des Gelenkteils sofort nach. Der verunfallte Fußgänger trifft dann nicht auf starre Hindernisse auf, wodurch die Verletzungsgefahr reduziert wird.

In einer Ausgestaltung der Erfindung bildet eine Sollbruchstelle des Befestigungsteils die Einrichtung zum Abknicken des Wischarms. Diese ist zweckmäßigerweise als Kerbe und/oder als Perforation in den Seitenwangen des Befestigungsteils ausgebildet und an dem zur Antriebswelle weisenden Ende angeordnet. Eine oder mehrere Kerben und/oder Perforationen schwächen den in Richtung des Aufpralls wirksamen Querschnitt des Befestigungsteils, so dass bei einem Aufprall mit einer entsprechend großen Kraft auf den Wischarm, das Befestigungsteil zielgerichtet an dieser Stelle bricht und der Wischarm zur Fahrzeugscheibe gedrückt wird. Nach einem Unfall muss der Wischarm in jedem Fall ausgetauscht werden. Vorteilhafterweise ist diese Ausführung mit wenig konstruktivem Aufwand realisierbar und erfordert keine zusätzlichen Bauteile. Sie kann aber auch zusätzlich zu anderen bekannten Maßnahmen angewendet werden, da sie auch wirksam ist, wenn der Aufprall in einem Abstand zur Antriebswelle erfolgt und eine Verschiebung der Antriebswelle durch Kippmomente erschwert ist.

Als weitere Variante wird die Einrichtung zum Abknicken durch ein Gelenk gebildet, welches den zweiten, fest mit der Antriebswelle verbundenen und als separates Bauteil ausgebildeten Bereich des Befestigungsteil mit einem ersten, ebenfalls als separates Bauteil ausgeführten Bereich verbindet. Die Schwenkbewegung des Gelenks ist in Abklapprichtung durch einen Anschlag begrenzt. Dieser stützt die durch die Zugfeder aufgebrachte Anpresskraft des Wischarms auf die Fahrzeugscheibe ab und verhindert, dass beim Abklappen des Wischers das Befestigungsteil nachgibt. Bei einem Aufprall auf den ersten Teil des Befestigungsteils in Richtung auf die Fahrzeugscheibe gibt dieser nach, indem er um die Achse des Gelenks kippt. Um in der abgeklappten Stellung des Wischarms das Gewicht des Gelenkteils und der daran befestigten Wischerteile zu kompensieren, ist zweckmäßigerweise eine Feder in Form einer Zugfeder vorgesehen, deren Wirkungslinie zwischen der Gelenkachse und dem Anschlag verläuft, und die auf die beiden Bauteile des Befestigungsteils wirkt.

Um eine Transportstellung und Abklappstellung stabiler zu gestalten, ist es vorteilhaft, das Gelenk als Rastgelenk auszubilden, bei dem die Vorspannung der Feder ausgehend von einer Raststellung, die der Betriebs- und Transportstellung entspricht, zunimmt, wenn das erste Bauteil relativ zum zweiten Bauteil geschwenkt wird. Dies kann durch eine Anordnung des Befestigungspunkts der Feder am zweiten Bauteil relativ zum Gelenkzapfen erreicht werden, indem er zur Antriebswelle hin versetzt angeordnet ist. Ferner können in Bezug auf die Wirkungslinie der Feder in der Rastposition beidseitig entsprechend gestaltete Rastflächen oder Rastnokken vorgesehen werden.

Bei einer Variante besitzt das Gelenk eine am einen Bauteil des Befestigungsteils angeformte Nabe mit einer Lagerbohrung, die in Längsrichtung des Befestigungsteils als Langloch ausgebildet ist und in die ein Gelenkzapfen eingreift, der am zweiten Bauteil des Befestigungsteils angeformt ist. Das Langloch kann zur leichteren Montage zum Befestigungsteil hin offen sein. Im Betriebszustand stützen sich beide Bauteile gegenseitig über den Gelenkzapfen und den Anschlag ab und werden durch die Feder in dieser Lage gehalten. Die Vorspannung der Feder sorgt dafür, dass die vormontierten Bauteile des Befestigungsteils während ihres Transports nicht auseinander fallen. Wirkt eine kritische Aufprallkraft auf den Wischarm, wird die Federkraft überwunden und das erste Bauteil des Befestigungsteils knickt zur Fahrzeugscheibe , ab. Der abknickende Bereich des Befestigungsteils bewirkt, dass auch das Abklappgelenk zu einem geringen Teil aus der Betriebsstellung abgeklappt wird. Vorteilhafterweise kann bei dieser Variante der Betriebszustand des Wischarms sehr einfach wieder hergestellt werden, indem die beiden Gelenke wieder in ihre Ausgangsposition zurück geklappt werden oder selbsttätig zurück klappen. Voraussetzung dafür ist, dass die Bauteile des Wischarms insgesamt nicht durch den Aufprall beschädigt wurden.

Da das Rastgelenk und das Abklappgelenk eine ähnliche Wirkungsweise besitzen und über eine Zugfeder verspannt werden, ist in einer Ausgestaltung der Erfindung für beide nur eine gemeinsame Zugfeder vorgesehen, die mittels eines Seilzugs zwischen einem ersten Befestigungspunkt am Gelenkteil und einem zweiten Befestigungspunkt am ersten Teil des Befestigungsteils gehalten wird. Die Zugfeder kann dem Befestigungsteil oder dem Gelenkteil zugeordnet sein. Zudem kommt diese Variante ohne den c-förmigen Bügel des Abklappgelenks aus, so dass weniger Platz zwischen dem Wischarm und der Fahrzeugscheibe benötigt wird.

Grundsätzlich ist bei allen Varianten der Erfindung der Schutz vor Verletzungen im gesamten Bewegungsbereich und in der Parklage des Wischarms gegeben. Außerdem kann der prinzipielle und bewährte Aufbau des Wischarms beibehalten werden. Gleiches gilt auch für die Fertigungsverfahren zur Herstellung des Wischarms. Die erfindungsgemäßen Veränderungen an den einzelnen Bauteilen des Wischarms erfordern nur einen geringen Mehraufwand, beispielsweise durch das Anpassen von Spritz- oder Biegewerkzeugen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen .

Es zeigen:
- Fig. 1: einen Längsschnitt durch einen Wischarm in Betriebsstellung,
- Fig. 2: eine Variante zu Fig.1,
- Fig. 3: eine vergrößerte Darstellung einer Einzelheit III aus Fig. 2 ohne Feder,
- Fig. 4: eine Variante zu Fig. 3 mit Feder,
- Fig. 5: eine weitere Variante zu Fig. 3 mit Feder,
- Fig. 6: eine Draufsicht entsprechend einem Pfeil VI in Fig. 5,
- Fig. 7: einen Längsschnitt durch einen Wischarm in abgeknickter Stellung,
- Fig. 8-9: Varianten zu Fig. 1,
- Fig. 10: einen Längsschnitt durch einen Wischarm in der Stellung zum Wechseln eines Wischbl atts.

### Beschreibung der Ausführungsbeispiele

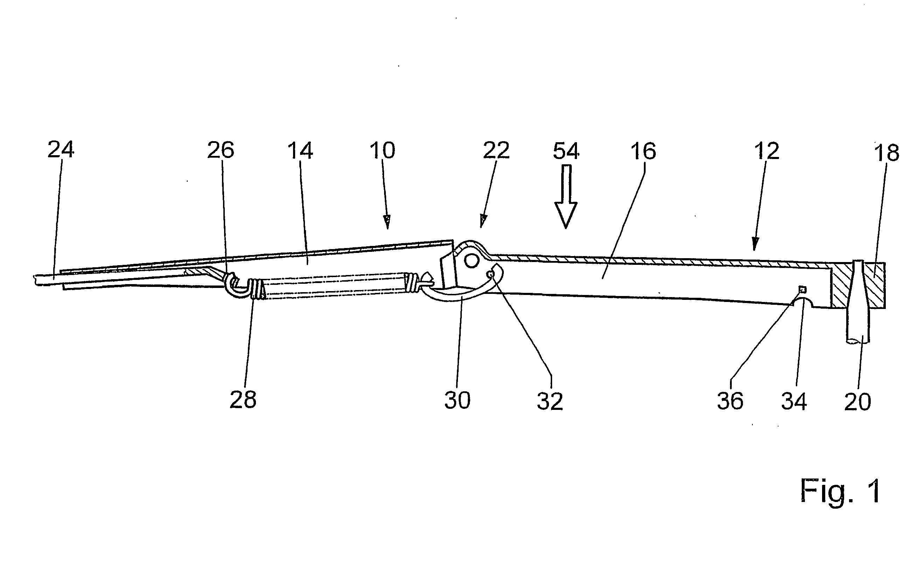

Ein Wischarm 10 besteht im Wesentlichen aus einem Befestigungsteil 12 und einem Gelenkteil 14 mit einer Wischstange 24 (Fig. 1) . Mit dem freien Ende der Wischstange 24 wird ein nicht näher dargestelltes Wischblatt gelenkig verbunden. Das Gelenkteil 14 ist mit dem Befestigungsteil 12 durch ein Abklappgelenk 22 verbunden. Beide Teile sind in der gezeigten Betriebsstellung durch eine Zugfeder 28 gegeneinander verspannt. Dazu ist die Zugfeder 28 an einem Ende in einer Öse 26 am Gelenkteil 14 und am anderen Ende über einen c-förmigen Bügel 30 an einem Stift 32 am Befestigungsteil 12 eingehängt.

Das Befestigungsteil 12 des Wischarms 10 sitzt fest auf dem freien Ende einer Antriebswelle 20. Nahe der Antriebswelle 20 weist das Befestigungsteil 12 in den Seitenwangen seines u-förmigen Profils eine Kerbe 34 und eine Perforation 36 auf. Durch diese wird der Querschnitt so geschwächt, dass im Falle eines Unfalls beim Aufprall einer Person der Querschnitt als Sollbruchstelle dient und das Befestigungsteil 12 an dieser Stelle in Richtung einer Aufprallkraft 54 leicht nachgibt und/oder bricht. Dabei sind die Größe und Anzahl der Kerben 34 und der Perforationen 36 so gewählt, dass das Befestigungsteil 12 unter normalen Bedingungen, auch unter einer Schneelast, nicht bricht. Die durch die Kerbe 34 und die Perforation 36 markierte Sollbruchstelle teilt das Befestigungsteil 12 in einen ersten Bereich 16, der dem Gelenkteil 14 zugewandt ist und bei Aufprall abknickt, und einen zweiten Bereich 18, der an der Antriebswelle 20 befestigt ist.

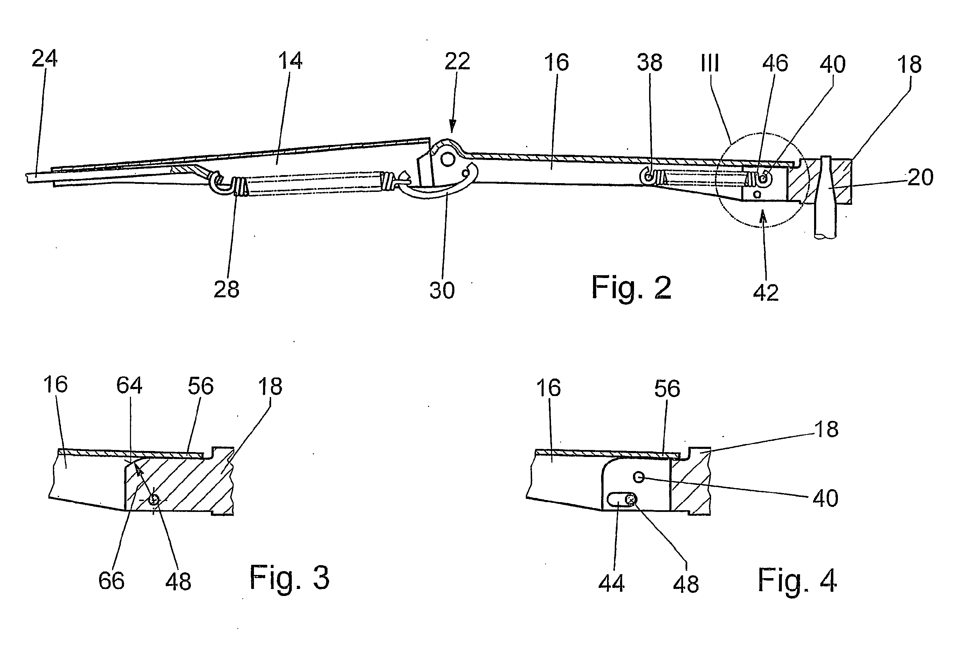

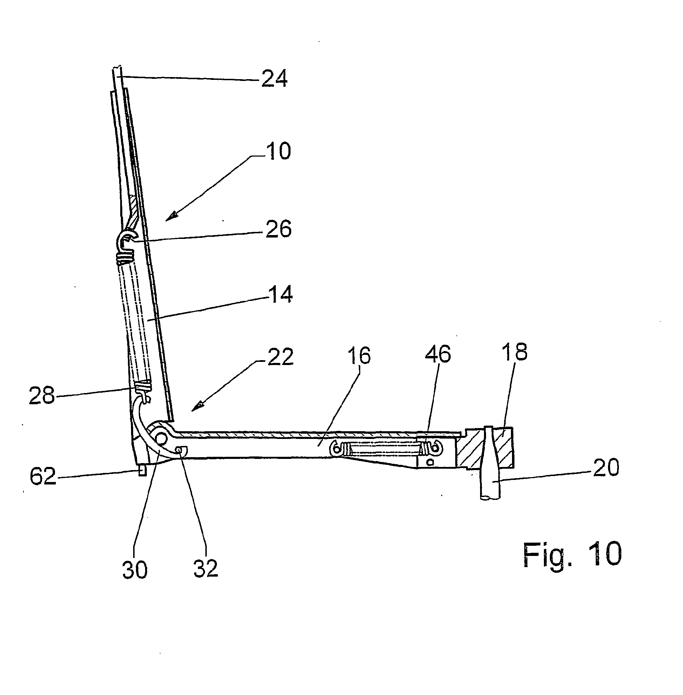

In einer Ausgestaltung der Erfindung wird die Einrichtung zum definierten Abknicken des Befestigungsteils 12 durch ein Gelenk 42 gebildet (Fig. 2). Dieses verbindet den ersten, abknickbaren Bereich 16 des Befestigungsteils 12, der als separates Bauteil ausgebildet ist, mit dem zweiten, fest mit der Antriebswelle 20 verbundenen Bereich 18, der ebenfalls als separates Bauteil ausgeführt ist. Ein Anschlag 56 begrenzt die Schwenkbewegung des Gelenks 42 in Abklapprichtung, während es zur Fahrzeugscheibe hin frei schwenken kann, wobei das den Anschlag 56 bildende Ende des ersten Bauteils 16 des Befestigungsteils 12 einer kreisbogenförmigen Kontur 64 mit einem Radius 66 um den Gelenkzapfen 48 folgt. In der Betriebsstellung des Wischarms 10 wird durch die Kraft der Zugfeder 28 das erste Bauteil 16 mit dem Anschlag 56 gegen das zweite Bauteil 18 gedrückt und überträgt so die Reaktionkraft zur Anpresskraft des Wischarms 10 auf die Antriebswelle 20. Um das Gewicht des Gelenkteils 14 und der damit verbundenen Teile des Scheibenwischers in der Abklappstellung (Fig. 10) zu kompensieren und das Befestigungsteil 12 in dieser Position in einer gestreckten Lage zu halten, ist zweckmäßigerweise eine Feder 46 vorgesehen, die mit einem Ende an einem Stift 38 des ersten Bauteils 16 und mit ihrem anderen Ende an einem Stift 40 am zweiten Bauteil 18 eingehängt ist (Fig. 2). Die Wirkungslinie der Feder 46, die als Zugfeder ausgebildet ist, verläuft zwischen dem Anschlag 56 und dem Gelenkzapfen 48, so dass sich ein stabiles Gleichgewicht ergibt.

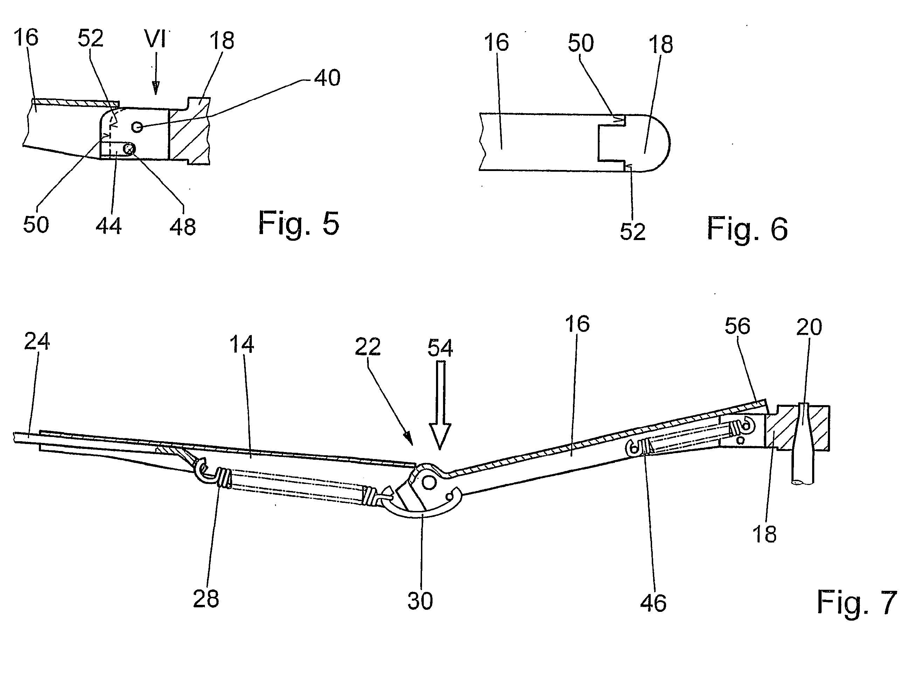

Die Stabilität der Position kann dadurch verbessert werden, dass das Gelenk 42 als Rastgelenk ausgebildet ist, wobei die Vorspannung der Feder 46 in Schwenkrichtung zu beiden Seiten der Rastposition deutlich zunimmt, indem sich der Abstand zwischen den Stiften 38, 40 vergrößert. Dies kann durch eine entsprechende Anordnung des Stifts 40 am zweiten Bauteil relativ zum Gelenkzapfen 48 erreicht werden, z.B. indem er zur Antriebswelle 20 hin versetzt ist. Eine andere Möglichkeit besteht darin, dass sich die Bauteile 16, 18 über Rastflächen 50, 52 oder Rastnocken abstützen, die bei der Schwenkbewegung die Bauteile 16, 18 relativ zueinander verlagern, wobei sich der Gelenkzapfen 48 in einer Nabe bewegen kann, die im Querschnitt als Langloch 44 ausgebildet ist (Fig. 4). Das Langloch 44, das sich in Längsrichtung des Befestigungsteils 12 erstreckt, kann zur einfacheren Montage zum Gelenkteil 14 hin offen sein (Fig. 5). Die Rastflächen 50, 52 können an beliebiger, geeigneter Stelle zwischen dem ersten und zweiten Bauteil 16, 18 vorgesehen werden, z.B. in dem Endbereich der Seitenwände des im Querschnitt u-förmigen Profils des ersten Bauteils 16 (Fig. 5 und 6).

Bei einem Aufprall wirkt eine Aufprallkraft 54 auf das Befestigungsteil 12 und das erste Bauteil 16 des Befestigungsteils 12 knickt ab. Der Gelenkzapfen 48 bildet dabei die Drehachse und das erste Bauteil 16 gleitet an den Rastflächen 50, 52 entlang, wobei die Vorspannung der Feder 46 zunächst erhöht wird. Der Wischarm 10 nimmt schließlich die in Fig. 7 dargestellte Lage ein. Die Aufprallkraft 54 bewirkt, dass auch das Gelenkteil 14 aus der gestreckten Lage der Betriebsstellung abgeklappt wird. Durch eine entsprechende Dimensionierung der Zugfeder 28 ist jedoch sichergestellt, dass das Gelenkteil 14 nicht vollständig nach oben in die Abklappstellung (Fig. 10) klappt.

Nach einem Aufprall können beide Gelenke 22, 42 wieder zurückgestellt werden. Dabei bildet das zur Antriebswelle 20 weisende Ende des U-förmigen Profils des ersten-Bauteils 16 des Befestigungsteils 12 einen Anschlag 56. Der Anschlag 56 verhindert, dass das erste Bauteil 16 zum einen unter dem Anpressdruck des Scheibenwischers und zum anderen beim Abklappen des Gelenkteils 14 nach außen abknickt.

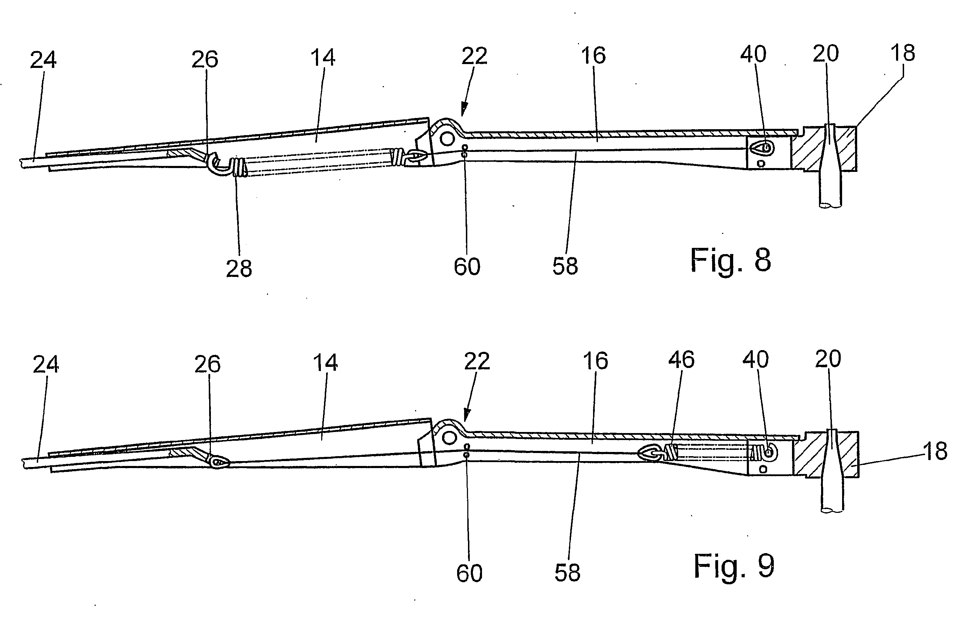

In einer weiteren Ausgestaltung der Erfindung ist für das Abklappgelenk 22 und das Rastgelenk 42 eine gemeinsame Zugfeder 28 oder 46 vorgesehen, die mittels eines Seilzugs 58 zwischen der Öse 26, die als ein erster Befestigungspunkt am Gelenkteil 14 dient, und dem Stift 40 befestigt ist, der als ein zweiter Befestigungspunkt am zweiten Bauteil 18 dient (Fig. 8 und Fig. 9). Der Seilzug 58 wird zwischen zwei Führungselementen 60 am Befestigungsteil 12 im Bereich des Abklappgelenks 22 geführt.

In Fig. 10 ist das Gelenkteil 14 fast senkrecht nach oben abgeklappt, damit ein an der Wischstange 24 angelenktes, in dieser Zeichnung nicht dargestelltes Wischblatt gewechselt werden kann. In dieser Stellung verhindert zweckmäßigerweise ein elastischer Anschlag 62, z.B. ein Gummipuffer, der im Bereich des Abklappgelenks 22 am Ende des Gelenkteils 14 angeordnet ist, dass das erste Bauteil 16 des Befestigungsteils 12 versehentlich gegen die Fahrzeugscheibe gestoßen werden kann.

## Patentansprüche

1. Wischarm (10), der aus einem Befestigungsteil (12) und einem über ein Abklappgelenk (22) an einem ersten Bereich (16) des Befestigungsteils (12) angelenkten Gelenkteil (14) mit einer Wischstange (24) aufgebaut ist, an der ein Wischblatt angelenkt ist, wobei das Befestigungsteil (12) mit einem zweiten Bereich (18) auf einer Antriebswelle (20) fest montiert und über eine Zugfeder (28) mit dem Gelenkteil (14) verspannt ist, **dadurch gekennzeichnet, dass** das Befestigungsteil (12) eine Einrichtung (34, 36, 42) aufweist, die ein definiertes Abknicken des zum Gelenkteil (14) weisenden ' ersten Bereichs (16) des Befestigungsteils (12) in Richtung auf eine Fahrzeugscheibe zulässt.

2. Wischarm (10) nach Anspruch 1, **dadurch gekennzeichnet, dass** die Einrichtung eine Sollbruchstelle (34, 36) des Befestigungsteils (12) ist.

3. Wischarm (10) nach Anspruch 2, **dadurch gekennzeichnet, dass** die Sollbruchstelle durch eine Kerbe (34) und/oder Perforationen (36) in den Seitenwangen des Befestigungsteils (12) gebildet ist.

4. Wischarm (10) nach Anspruch 1, **dadurch gekennzeichnet, dass** der erste und zweite Bereich (16, 18) getrennte Bauteile sind, die durch die als Gelenk (42) ausgebildete Einrichtung verbunden sind, dessen Schwenkbewegung in Abklapprichtung durch einen Anschlag (56) begrenzt ist. (Fig. 2).

5. Wischarm (10) nach Anspruch 4, **dadurch gekennzeichnet, dass** eine Feder.(46) in einer Betriebsstellung den ersten Bereich (16) gegen den Anschlag (56) drückt und so ausgelegt ist, dass sie in der Abklappstellung des Wischarms (10) (Fig. 10) das Gewicht des Wischarms (10) trägt.

6. Wischarm (10) nach Anspruch 4, **dadurch gekennzeichnet, dass** das Gelenk (42) eine Nabe mit einer Lagerbohrung hat, die in Längsrichtung des Befestigungsteils (12) im Querschnitt als Langloch (44) ausgebildet ist und in die ein Gelenkzapfen (48) eingreift, wobei sich die Teile (16, 18) des Befestigungsteils (12) in der Betriebsstellung über Rastflächen (50, 52) und/oder am Gelenkzapfen (48) und dem Anschlag (56) gegenseitig abstützen (Fig. 4, Fig. 5).

7. Wischarm (10) nach Anspruch 6, **dadurch gekennzeichnet, dass** das Langloch (44) zum Gelenkteil (14) hin offen ist (Fig. 5).

8. Wischarm (10) nach einem der Ansprüche 4 bis 7, **dadurch gekennzeichnet, dass** die Feder (46) eine Zugfeder ist.

9. Wischarm (10) nach Anspruch 8, **dadurch gekennzeichnet, dass** für das Abklappgelenk (22) und das Gelenk (42) eine gemeinsame Zugfeder (28, 46) vorgesehen ist, die mittels eines Seilzugs (58) zwischen einem ersten Befestigungspunkt (26) am Gelenkteil (14) und einem zweiten Befestigungspunkt (40) am zweiten Bauteil (18) des Befestigungsteils (12) befestigt ist, wobei der Seilzug (58) zwischen zwei quer zur Längsrichtung verlaufenden Führungselementen (60) am Befestigungsteil (12) im Bereich des Abklappgelenks (22) geführt ist.

10. Wischarm (10) nach einem der Ansprüche 4 bis 9, **dadurch gekennzeichnet, dass** das Ende des Gelenkteils (14), das dem Befestigungsteil (12) zugewandt ist, einen elastischen Anschlag (62) aufweist, der in einer Abklappstellung (Fig. 10) zur Fahrzeugscheibe weist.

## Claims

1. Wiper arm (10) which is constructed from a fastening part (12) and an articulated part (14) which is articulated on a first region (16) of the fastening part (12) via a tilting hinge (22) and has a wiper rod (24) on which a wiper blade is articulated, the fastening part (12) being firmly fitted with a second region (18) on a drive shaft (20) and being clamped to the articulated part (14) via a tension spring (28), **characterized in that** the fastening part (12) has a device (34, 36, 42) which permits a defined bending, in the direction of a vehicle window, of that first region (16) of the fastening part (12) which points towards the articulated part (14).

2. Wiper arm (10) according to Claim 1, **characterized in that** the device is a predetermined breaking point (34, 36) of the fastening part (12).

3. Wiper arm (10) according to Claim 2, **characterized in that** the predetermined breaking point is formed by a notch (34) and/or perforations (36) in the side walls of the fastening part (12).

4. Wiper arm (10) according to Claim 1, **characterized in that** the first and second regions (16, 18) are separate components which are connected by the device designed as a hinge (42) whose pivoting movement is restricted in the tilting direction by a stop (56) (Fig. 2) .

5. Wiper arm (10) according to Claim 4, **characterized in that**, in an operational position, a spring (46) presses the first region (16) against the stop (56) and is configured in such a manner that it bears the weight of the wiper arm (10) in the tilted position of the wiper arm (10).

6. Wiper arm (10) according to Claim 4, **characterized in that** the hinge (42) has a hub with a bearing hole which is designed in cross section as a slot (44) in the longitudinal direction of the fastening part (12) and in which a hinge pin (48) engages, the parts (16, 18) of the fastening part (12) being mutually supported in the operational position via latching surfaces (50, 52) and/or on the hinge pin (48) and the stop (56) (Fig. 4, Fig. 5).

7. Wiper arm (10) according to Claim 6, **characterized in that** the slot (44) is open towards the articulated part (14) (Fig. 5).

8. Wiper arm (10) according to one of Claims 4 to 7, **characterized in that** the spring (46) is a tension spring.

9. Wiper arm (10) according to Claim 8, **characterized in that** a common tension spring (28, 46) is provided for the tilting hinge (22) and the hinge (42), the said tension spring being fastened between a first fastening point (26) on the articulated part (14) and a second fastening point (40) on the second component (18) of the fastening part (12) by means of a sheathed cable (58), the sheathed cable (58) being guided between two guide elements (60), which run transversely to the longitudinal direction, on the fastening part (12) in the region of the tilting hinge (22).

10. Wiper arm (10) according to one of Claims 4 to 9, **characterized in that that** end of the articulated part (14) which faces the fastening part (12) has an elastic stop (62) which points towards the vehicle window in a tilted position (Fig. 10).

## Revendications

1. Bras d'essuie-glace (10) composé d'une pièce de fixation (12) et d'une pièce d'articulation (14) reliée par une articulation de rabattement (22) à une première partie (16) de la pièce de fixation (12), et munie d'une tige d'essuie-glace (24) à laquelle est articulé un balai d'essuie-glace, la pièce de fixation (12) montée solidairement sur l'arbre d'entraînement (20) par une seconde partie (18) étant mise en tension avec la pièce articulée (14) par un ressort de traction (28),
**caractérisé en ce que**
la pièce de fixation (12) comporte une installation (34, 36, 42) permettant un fléchissement défini de la première partie (16) de la pièce de fixation (12) tournée vers la pièce d'articulation (14) en direction du pare-brise.

2. Bras d'essuie-glace (10) selon la revendication 1,
**caractérisé en ce que**
l'installation est un point de rupture de consigne (34, 36) de la pièce de fixation (12).

3. Bras d'essuie-glace (10) selon la revendication 2,
**caractérisé en ce que**
le point de rupture de consigne est formé par une encoche (34) et/ou des perforations (36) dans les parois latérales de la pièce de fixation (12).

4. Bras d'essuie-glace (10) selon la revendication 1,
**caractérisé en ce que**
la première et la seconde partie (16, 18) sont des composants distincts reliés par une installation en forme d'articulation (42) dont le mouvement de basculement est limité par une butée (56) dans la direction du rabattement (figure 2).

5. Bras d'essuie-glace (10) selon la revendication 4,
**caractérisé en ce qu'**
un ressort (46) en position de fonctionnement, pousse la première partie (16) contre la butée (56) et il est conçu pour porter le poids du bras d'essuie-glace (10) en position de rabattement du bras (10) (figure 10).

6. Bras d'essuie-glace (10) selon la revendication 4,
**caractérisé en ce que**
l'articulation (42) comporte un moyeu muni d'un perçage de palier à section en forme de trou oblong (44) dans la direction longitudinale de la pièce de fixation (12) et recevant un goujon d'articulation (48),
et en position de fonctionnement les parties (16, 18) de la pièce de fixation (12) s'appuie par des surfaces d'accrochage (50, 52) et/ou contre le goujon d'articulation (48) et la butée (56), par appui réciproque (figures 4,5).

7. Bras d'essuie-glace (10) selon la revendication 6,
**caractérisé en ce que**
le trou oblong (44) est ouvert vers la pièce d'articulation (14) (figure 5).

8. Bras d'essuie-glace (10) selon l'une quelconque des revendications 4 à 7,
**caractérisé en ce que**
le ressort (46) est un ressort de traction.

9. Bras d'essuie-glace (10) selon la revendication 8,
**caractérisé en ce qu'**
un ressort de traction (28, 46) commun à l'articulation de rabattement (22) et à l'articulation (42), est fixé par un câble de traction (58) entre un premier point de fixation (26) à la pièce d'articulation (14) et un second point de fixation (40) à la seconde partie (18) de la pièce de fixation (12),
le câble de traction (58) étant guidé entre deux éléments de guidage (60) dirigés dans la direction longitudinale, par la pièce de fixation (12), au niveau de l'articulation de rabattement (22).

10. Bras d'essuie-glace (10) selon l'une quelconque des revendications 4 à 9,
**caractérisé en ce que**
l'extrémité de la pièce d'articulation (14) tournée vers la pièce de fixation (12) comporte une butée élastique (62) dirigée vers le pare-brise en position de rabattement (figure 10).
